# FASCICULE DE BREVET EUROPEEN

(11) **EP 1 529 468 B1**
(45) Date de publication et mention de la délivrance du brevet: **05.07.2006**
(21) Numéro de dépôt: 04356166.1
(22) Date de dépôt: 12.10.2004
(51) Int. Cl.: A47J 19/02

(54) **Appareil presse agrumes avec accessoire de déversement.**
Zitronenpresse mit Ausgiessvorrichtung
Citrus fruit squeezer with pouring device

(30) Priorité: 04.11.2003 FR 0312913
(43) Date de publication de la demande: 11.05.2005
(73) Titulaire: SEB S.A., 69130 Ecully (FR)
(72) Inventeur: Basora, Antonio, 08028 Barcelone (ES)
(74) Mandataire: Kiehl, Hubert

(56) Documents cités:
- EP-A- 1 297 767
- DE-B- 1 248 247
- GB-A- 685 987
- GB-A- 2 275 415
- US-A- 4 378 730

## Description

La présente invention concerne le domaine technique des appareils presse-agrumes électriques.

Les presse-agrumes électriques comportent usuellement une base contenant un moteur, un réceptacle destiné à recueillir le jus, un tamis pour recueillir la pulpe, et un cône presse-agrumes. Les robots ménagers multifonctions peuvent comporter un accessoire presse-agrumes tel qu'un cône presse-agrumes agencé dans un tamis filtrant disposé sur le bol de travail de l'appareil, le cône presse-agrumes étant entraîné par une transmission traversant le bol de travail.

Il est connu du document GB 2 275 415 un presse agrumes du type précité, comportant un accessoire de déversement entre le réceptacle et le tamis. L'accessoire de déversement comporte une sortie d'écoulement. L'accessoire de déversement peut occuper deux positions sur le réceptacle : dans la première position, la sortie d'écoulement est disposée au dessus du réceptacle ; dans la deuxième position, la sortie d'écoulement est disposée au dessus d'une ouverture inférieure du réceptacle, de sorte que le jus peut s'écouler dans un récipient placé à côté de l'appareil. Un tel appareil permet donc de recueillir le jus soit dans le réceptacle de l'appareil, soit dans un récipient. Toutefois le réceptacle de cet appareil présente une construction particulière, du fait de la présence de l'ouverture inférieure.

L'objet de la présente invention est de simplifier la construction d'un presse-agrumes permettant de recueillir le jus soit dans le réceptacle de l'appareil, soit dans un récipient disposé à côté de l'appareil.

Cet objet est atteint avec un appareil presse-agrumes électrique comportant un boîtier, un réceptacle à jus agencé sur le boîtier, un accessoire de déversement disposé sur le réceptacle à jus, et un cône presse-agrumes, le boîtier contenant un moteur entraînant le cône presse-agrumes par l'intermédiaire d'une transmission, l'accessoire de déversement présentant un fond permettant un écoulement par gravité du jus recueilli vers une sortie d'écoulement latérale, le fond comportant une ouverture prévue pour le passage de la transmission, du fait que l'accessoire de déversement comporte un axe de transmission appartenant à la transmission, l'axe de transmission étant monté libre en rotation dans l'ouverture. Cette disposition permet d'utiliser le presse-agrumes avec ou sans l'accessoire de déversement. La construction de l'appareil est simplifiée. Le réceptacle à jus peut être amovible ou non par rapport au boîtier.

Avantageusement, un tamis filtrant est agencé sous le cône presse-agrumes. Le tamis filtrant peut ainsi être agencé sur l'accessoire de déversement ou sur le réceptacle à jus.

Selon un mode de réalisation avantageux, le réceptacle à jus présente une cheminée prévue pour le passage d'un axe d'entraînement appartenant à la transmission. Le réceptacle à jus peut ainsi être dépourvu d'élément appartenant à la transmission. De préférence, le réceptacle à jus est alors amovible par rapport au boîtier. En alternative, une partie de la transmission peut être montée sur le réceptacle à jus.

Avantageusement alors, l'accessoire de déversement présente autour de l'ouverture une conformation annulaire non circulaire et coopérant avec une partie supérieure non circulaire de la cheminée. Cette disposition permet un blocage en rotation de l'accessoire de déversement par rapport au réceptacle à jus.

Avantageusement encore, l'axe de transmission comporte une partie inférieure entraînée par l'axe d'entraînement.

Avantageusement encore l'axe de transmission comporte une partie supérieure susceptible d'entraîner le cône presse-agrumes. La partie supérieure de l'axe de transmission peut entraîner le cône presse-agrumes directement ou non.

Avantageusement alors la partie supérieure de l'axe de transmission présente deux conformations décalées angulairement et de hauteurs différentes, cette disposition permettant de maintenir le cône presse-agrumes à deux hauteurs différentes au-dessus du tamis filtrant, pour obtenir un jus avec plus ou moins de pulpe.

Avantageusement encore pour une meilleure ergonomie la sortie d'écoulement latérale s'engage sur un bec verseur du réceptacle à jus.

L'invention sera mieux comprise à l'étude d'un exemple de réalisation, pris à titre nullement limitatif, illustré dans les figures annexées, dans lesquelles :
- la figure 1 est une vue en coupe d'un exemple de réalisation d'un presse agrume selon l'invention, comportant un accessoire de déversement,
- la figure 2 est une vue en perspective de l'accessoire de déversement montré à la figure 1,
- la figure 3 est une vue en coupe de l'accessoire de déversement montré aux figures 1 et 2.
- la figure 4 est une vue en coupe du presse-agrumes montré à la figure 1, sans l'accessoire de déversement.

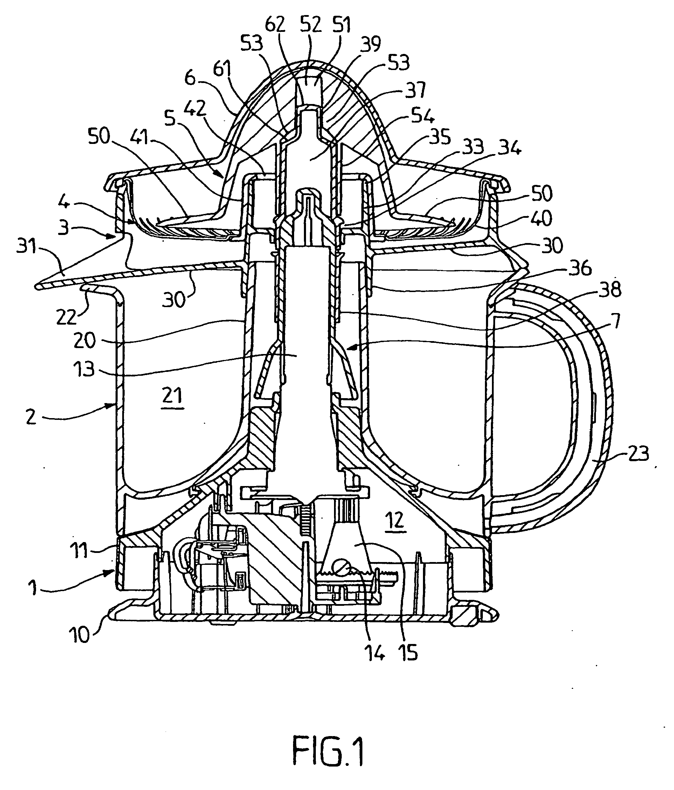

Le presse-agrumes électrique illustré à la figure 1 comporte un boîtier 1, un réceptacle à jus 2 agencé sur le boîtier 1, un accessoire de déversement 3 disposé sur le réceptacle à jus 2, un tamis filtrant 4 disposé sur l'accessoire de déversement 3, un cône presse-agrumes 5 et un couvercle 6.

Le boîtier 1 comporte un socle 10 et une demi-coque supérieure 11 formant un logement 12 contenant un moteur (non visible sur la figure 1) relié à un axe d'entraînement 13. Le moteur entraîne le cône presse-agrumes 5 par l'intermédiaire d'une transmission 7. Plus particulièrement, le moteur présente un arbre 14 entraînant l'axe d'entraînement 13 par l'intermédiaire d'une pièce de transmission 15. L'axe d'entraînement 13 appartient à la transmission 7. L'axe d'entraînement 13 sort de la face supérieure du boîtier 1.

Le réceptacle à jus 2 présente une cheminée 20 prévue pour le passage de l'axe d'entraînement 13. Le réceptacle à jus 2 forme un récipient annulaire 21 agencé autour de la cheminée 20. Le réceptacle à jus 2 comporte un bec verseur 22 en partie supérieure du récipient annulaire 21. Le réceptacle à jus 2 comporte une poignée 23. La cheminée 20 est prévue pour le passage de l'axe d'entraînement 13.

L'accessoire de déversement 3 présente un fond 30 incliné vers une sortie d'écoulement latérale 31. Une paroi latérale 32 entoure le fond 30. La sortie d'écoulement 31 s'engage sur le bec verseur 22 et contribue au blocage en rotation de l'accessoire de déversement 3 par rapport au réceptacle à jus 2. Le fond 30 présente une protubérance centrale supérieure 33 et une ouverture 34 prévue pour le passage de la transmission 7. La protubérance centrale supérieure 33 forme une paroi annulaire supérieure 35 autour de l'ouverture 34. La protubérance centrale supérieure 33 est tronconique. L'accessoire de déversement 3 présente une conformation annulaire inférieure 36 autour de l'ouverture 34. La conformation annulaire inférieure 36 coopère avec une partie supérieure de la cheminée 20 du réceptacle à jus 2. Plus particulièrement, la conformation annulaire inférieure 36 et la partie supérieure de la cheminée 20 sont légèrement tronconiques, avec une section non circulaire pour assurer un blocage en rotation de l'accessoire de déversement 3 par rapport au réceptacle à jus 2. La conformation annulaire inférieure 36 est engagée autour de la partie supérieure de la cheminée 20.

L'accessoire de déversement 3 comporte un axe de transmission 37 appartenant à la transmission 7. L'axe de transmission 37 est monté libre en rotation dans l'ouverture 34. L'axe de transmission 37 présente une partie inférieure 38 susceptible de venir en prise avec l'axe d'entraînement 13. L'axe de transmission 37 présente une partie supérieure 39 susceptible d'entraîner le cône presse-agrumes 5.

Le tamis filtrant 4 agencé sous le cône presse-agrumes 5 comporte une zone de filtration annulaire 40 entourant une conformation centrale 41 présentant un passage 42. La conformation centrale 41 est engagée autour de la protubérance centrale supérieure 33 de l'accessoire de déversement 3. La conformation centrale 41 et la partie supérieure de la protubérance centrale supérieure 33 sont légèrement tronconiques avec une section non circulaire.

Le cône presse-agrumes 5 présente deux ailettes inférieures 50 s'étendant radialement vers l'extérieur, ainsi qu'une conformation d'entraînement inférieure 51 dans laquelle peut s'engager la partie supérieure 39 de l'axe de transmission 37. Plus particulièrement, la conformation d'entraînement inférieure 51 comporte une conformation concave 52 entourée de conformations convexes 53. Une portion tubulaire inférieure 54 permet un meilleur guidage de la partie supérieure 39 de l'axe de transmission 37.

L'accessoire de déversement 3 permet de recueillir le jus pressé grâce au cône presse-agrumes 5 dans un récipient disposé sous la sortie d'écoulement latérale 31. Le fond 30 de l'accessoire de déversement 3 permet un écoulement par gravité du jus recueilli vers la sortie d'écoulement latérale 31.

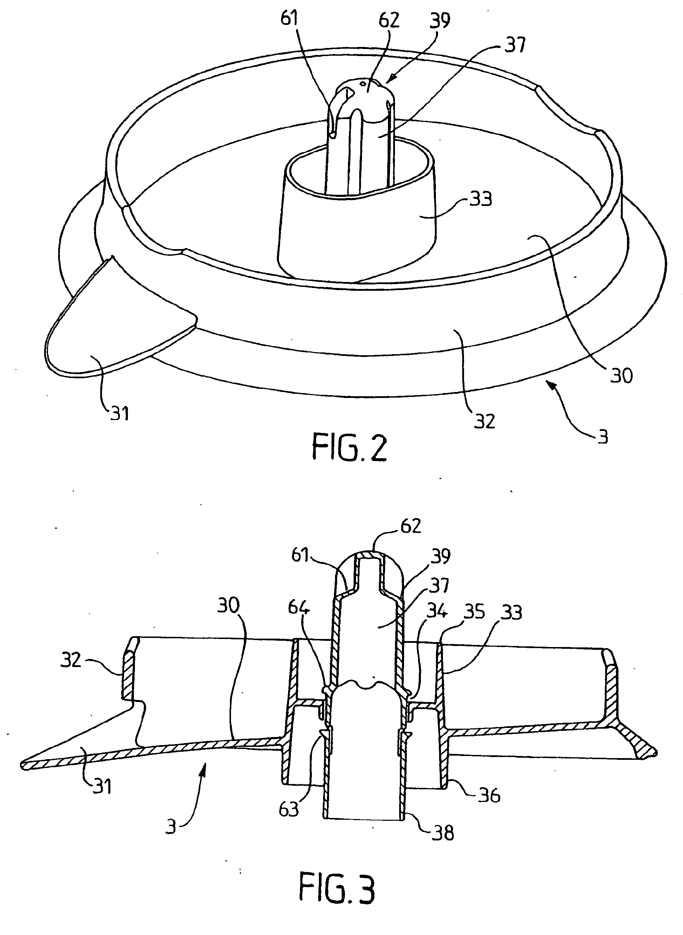

La partie supérieure 39 de l'axe de transmission 37 de l'accessoire de déversement 3 présente deux conformations 61, 62 décalées angulairement et de hauteurs différentes, tel que mieux visible aux figures 2 et 3. Lorsque l'une des conformations convexes 53 est engagée sur la conformation 61 la plus basse, tel que représenté à la figure 1, la conformation 62 la plus haute est engagée dans la conformation concave 52. Les ailettes inférieures 50 sont à proximité du tamis filtrant 4 et davantage de jus peut être extrait de la pulpe. Lorsque l'une des conformations convexes 53 est engagée sur la conformation 62 la plus élevée, les ailettes inférieures 50 sont éloignées du tamis filtrant 4 et la pulpe reste dans le tamis filtrant 4. Ainsi deux qualités de jus différentes peuvent être obtenues en utilisant l'accessoire de déversement 3.

La partie inférieure 38 et la partie supérieure 39 de l'axe de transmission 37 sont réalisées en deux pièces assemblées, de sorte que l'axe de transmission 37 est monté libre en rotation dans l'ouverture 34 de l'accessoire de déversement, tout en étant maintenu en translation axiale grâce à des ergots 63, 64 ménagés respectivement sur la partie inférieure 38 et sur la partie supérieure 39.

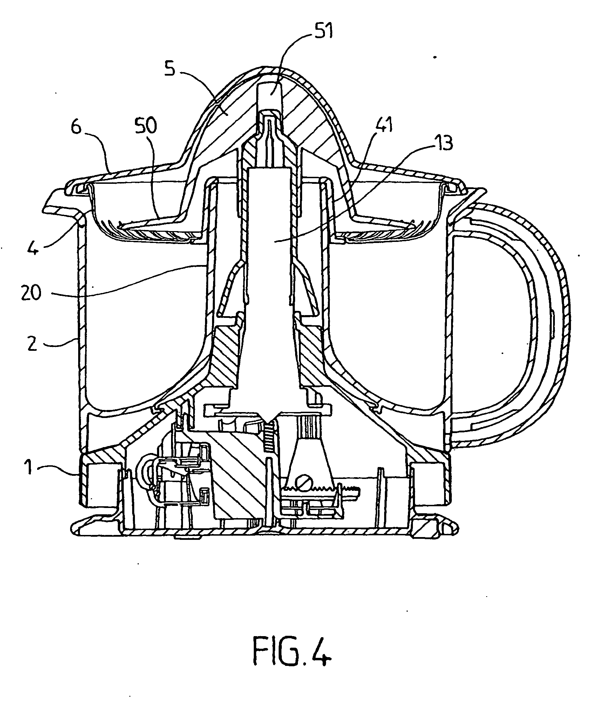

Tel que représenté à la figure 4, le presse-agrumes électrique peut être utilisé sans l'accessoire de déversement 3. La conformation centrale 41 du tamis filtrant 4 est alors engagée autour de la cheminée 20 du réceptacle à jus 2. La conformation d'entraînement inférieure 51 du cône presse-agrumes 5 est engagée sur l'axe d'entraînement 13.

L'axe d'entraînement 13 peut comporter deux conformations décalées angulairement et de hauteurs différentes, prévues pour coopérer avec les conformations convexes 53 du cône presse-agrumes 5, pour rapprocher ou éloigner les ailettes 50 du tamis filtrant 4. Ainsi deux qualités de jus peuvent être obtenues en l'absence de l'accessoire de déversement 3.

A titre de variante, l'axe d'entraînement 13 pourrait appartenir au réceptacle à jus 2.

A titre de variante, le réceptacle à jus 2 pourrait être solidaire du boîtier 1 contenant le moteur.

A titre de variante, l'axe de transmission 37 et/ou l'axe d'entraînement 13 pourrait entraîner le cône presse-agrumes 5 de manière indirecte. Par exemple, l'axe de rotation du cône presse-agrumes 5 pourrait être décalé par rapport à par l'axe de transmission 37 et/ou à l'axe d'entraînement 13 ; ou encore un axe de transmission ou un réducteur pourrait être agencé dans le tamis filtrant 4.

La présente invention n'est nullement limitée à l'exemple de réalisation décrit et à ses variantes, mais englobe de nombreuses modifications dans le cadre des revendications.

## Revendications

1. Appareil presse-agrumes électrique comportant un boîtier (1), un réceptacle à jus (2) agencé sur le boîtier (1), un accessoire de déversement (3) disposé sur le réceptacle à jus (2), et un cône presse-agrumes (5), le boîtier (1) contenant un moteur entraînant le cône presse-agrumes (5) par l'intermédiaire d'une transmission (7), l'accessoire de déversement (3) présentant un fond (30) permettant un écoulement par gravité du jus recueilli vers une sortie d'écoulement latérale (31), le fond (30) comportant une ouverture (34) prévue pour le passage de la transmission (7), **caractérisé en ce que** l'accessoire de déversement (3) comporte un axe de transmission (37) appartenant à la transmission (7), l'axe de transmission (37) étant monté libre en rotation dans l'ouverture (34).

2. Appareil presse-agrumes électrique selon la revendication 1, **caractérisé en ce qu'**un tamis filtrant (4) est agencé sous le cône presse-agrumes (5).

3. Appareil presse-agrumes électrique selon la revendication 2, **caractérisé en ce que** le tamis filtrant (4) est disposé sur l'accessoire de déversement (3).

4. Appareil presse-agrumes électrique selon l'une des revendications 1 à 3, **caractérisé en ce que** le réceptacle à jus (2) présente une cheminée (20) prévue pour le passage d'un axe d'entraînement (13) appartenant à la transmission (7).

5. Appareil presse-agrumes électrique selon la revendication 4, **caractérisé en ce que** l'accessoire de déversement (3) présente une conformation annulaire inférieure (36) autour de l'ouverture (34), la conformation annulaire inférieure (36) étant non circulaire et coopérant avec une partie supérieure non circulaire de la cheminée (20).

6. Appareil presse-agrumes électrique selon l'une des revendications 4 ou 5, **caractérisé en ce que** l'axe de transmission (37) comporte une partie inférieure (38) susceptible de venir en prise avec l'axe d'entraînement (13).

7. Appareil presse-agrumes électrique selon l'une des revendications 4 à 6 **caractérisé en ce que** l'axe de transmission (37) comporte une partie supérieure (39) susceptible d'entraîner le cône presse-agrumes (5).

8. Appareil presse-agrumes électrique selon la revendication 7, **caractérisé en ce que** la partie supérieure (39) de l'axe de transmission (37) présente deux conformations (61, 62) décalées angulairement et de hauteurs différentes.

9. Appareil presse-agrumes électrique selon l'une des revendications 1 à 8, **caractérisé en ce que** la sortie d'écoulement latérale (31) s'engage sur un bec verseur (22) du réceptacle à jus (2).

## Claims

1. An electric citrus squeezer appliance comprising a housing (1), a juice receptacle (2) arranged on the housing (1), a pouring accessory (3) placed on the juice receptacle (2), and a squeezer cone (5), the housing (1) containing a motor for driving the squeezer cone (5) via a transmission (7), the pouring accessory (3) presenting a bottom (30) enabling collected juice to flow under gravity towards a lateral delivery outlet (31), the bottom (30) including an opening (34) for the purpose of passing the transmission (7), the appliance being **characterized in that** the pouring accessory (3) includes a transmission shaft (37) forming part of the transmission (7), the transmission shaft (37) being mounted to rotate freely in the opening (34).

2. An electric citrus squeezer appliance according to claim 1, **characterized in that** a filter screen (4) is arranged under the squeezer cone (5).

3. An electric citrus squeezer appliance according to claim 2, **characterized in that** the filter screen (4) is placed on the pouring accessory (3).

4. An electric citrus squeezer appliance according to any one of claims 1 to 3, **characterized in that** the juice receptacle (2) presents a chimney (20) for passing a drive shaft (13) forming part of the transmission (7).

5. An electric citrus squeezer appliance according to claim 4, **characterized in that** the pouring accessory (3) presents a bottom annular shape (36) around the opening (34), the bottom annular shape (36) being non-circular and co-operating with a non-circular top portion of the chimney (20).

6. An electric citrus squeezer appliance according to claim 4 or claim 5, **characterized in that** the drive shaft (37) includes a bottom portion (38) suitable for engaging with the drive shaft (13).

7. An electric citrus squeezer appliance according to any one of claims 4 to 6, **characterized in that** the transmission shaft (37) includes a top portion (39) suitable for driving the squeezer cone (5).

8. An electric citrus squeezer appliance according to claim 7, **characterized in that** the top portion (39) of the transmission shaft (37) presents two shapes (61, 62) that are angularly offset and of different heights.

9. An electric citrus squeezer appliance according to any one of claims 1 to 8, **characterized in that** the lateral outflow outlet (31) engages on a pouring spout (22) of the juice receptacle (2).

## Patentansprüche

1. Elektrische Zitruspresse mit einem Gehäuse (1), einem Saftauffangbehälter (2), der auf dem Gehäuse (1) angeordnet ist, einem Ausgießzubehörteil (3), das auf dem Saftauffangbehälter (2) angeordnet ist, und einem Zitruspressenkegel (5), wobei das Gehäuse (1) einen Motor umfasst, der den Zitruspressenkegel (5) über eine Kraftübertragung (7) antreibt, wobei das Ausgießzubehörteil (3) einen Boden (30) aufweist, der ein Abfließen des aufgefangenen Saftes zu einem seitlichen Auslass (31) hin aufgrund der Schwerkraft ermöglicht, wobei der Boden (30) eine Öffnung (34) aufweist, die zum Hindurchführen der Kraftübertragung (7) vorgesehen ist, **dadurch gekennzeichnet, dass** das Ausgießzubehörteil (3) eine Kraftübertragungsachse (37) aufweist, die zur Kraftübertragung (7) gehört, wobei die Kraftübertragungsachse (37) in der Öffnung (34) frei drehbar angebracht ist.

2. Elektrische Zitruspresse nach Anspruch 1, **dadurch gekennzeichnet, dass** unter dem Zitruspressenkegel (5) ein Filtriersieb (4) angeordnet ist.

3. Elektrische Zitruspresse nach Anspruch 2, **dadurch gekennzeichnet, dass** das Filtriersieb (4) auf dem Ausgießzubehörteil angeordnet ist (3).

4. Elektrische Zitruspresse nach einem der Ansprüche 1 bis 3, **dadurch gekennzeichnet, dass** der Saftauffangbehälter (2) einen Schaft (20) aufweist, der zum Hindurchführen einer zur Kraftübertragung (7) gehörenden Antriebsachse (13) vorgesehen ist.

5. Elektrische Zitruspresse nach Anspruch 4, **dadurch gekennzeichnet, dass** das Ausgießzubehörteil (3) um die Öffnung (34) eine untere, ringförmige Anformung (36) aufweist, wobei die untere, ringförmige Anformung (36) nicht kreisförmig ist und mit einem oberen, nicht kreisförmigen Teil des Schaftes (20) zusammenwirkt.

6. Elektrische Zitruspresse nach einem der Ansprüche 4 oder 5, **dadurch gekennzeichnet, dass** die Kraftübertragungsachse (37) einen unteren Teil (38) aufweist, der mit der Antriebsachse (13) in Eingriff gebracht werden kann.

7. Elektrische Zitruspresse nach einem der Ansprüche 4 bis 6, **dadurch gekennzeichnet, dass** die Kraftübertragungsachse (37) einen oberen Teil (39) aufweist, der den Zitruspressenkegel (5) antreiben kann.

8. Elektrische Zitruspresse nach Anspruch 7, **dadurch gekennzeichnet, dass** der obere Teil (39) der Kraftübertragungsachse (37) zwei Anformungen (61, 62) aufweist, die winkelversezt sind und verschiedene Höhen aufweisen.

9. Elektrische Zitruspresse nach einem der Ansprüche 1 bis 8, **dadurch gekennzeichnet, dass** der seitige Auslass (31) an eine Ausgießtülle (22) des Saftauffangbehälters (2) eingreift.
